# EUROPEAN PATENT APPLICATION

(11) **EP 2 930 593 A1**
(43) Date of publication of application: **14.10.2015**
(21) Application number: 15162849.2
(22) Date of filing: 08.04.2015
(51) Int. Cl.: G06F 3/038, G06F 3/14, G06F 3/0354

(54) **MULTI-DISPLAY SYSTEM AND METHOD FOR CONTROLLING THEREOF**

(30) Priority: 09.04.2014 KR 20140042184
(71) Applicant: Samsung Electronics Co., Ltd, Gyeonggi-do 443-742 (KR)
(72) Inventor: Choi, Eun-seok, Gyeonggi-do, (KR); Yoo, Ho-june, Seoul (KR)
(74) Representative: Appleyard Lees

(57) **Abstract**

A computing apparatus, a method for controlling the computing apparatus, and a multi-display system thereof are provided. The method includes determining a size of a virtual display screen formed by a plurality of display apparatuses connected to the computing apparatus (S1010); setting an initial position of a pointer associated with a pointing apparatus (S1020); computing determining a movement range of the pointing apparatus based on the size of the virtual display screen and the initial position of the pointer (S1030); and in response to receiving movement information about movement of the pointing apparatus within the movement range (S1040), controlling the plurality of display apparatuses to display the pointer in a corresponding portion of the virtual display screen (S1050).

## Description

### CROSS-REFERENCE TO RELATED APPLICATION

This application claims priority from Korean Patent Application No. 10-2014-0042184 filed in the Korean Intellectual Property Office on April 9, 2014, the disclosure of which is incorporated herein by reference.

### BACKGROUND

### 1. Field

Methods and apparatuses consistent with exemplary embodiments relate to a computing apparatus, method for controlling the computing apparatus, and multi-display system thereof, and more particularly to a computing apparatus configured to display a pointer in a plurality of display apparatuses, a method for controlling the computing apparatus, and a multi-display system thereof.

### 2. Description of the Related Art

Generally, in a conference room setting, an image is displayed on a large screen so that numerous people can view the image. Typically, a beam projector is used to display the image on the screen. A laser pointer is typically used to indicate a certain part of the image displayed on the screen.

Recently, the size of other types of displays has become larger, while the cost for these larger displays has dropped. Therefore, instead of a beam protector, large format displays such as an organic light emitting diode (OLED) display, a liquid crystal display (LCD), and a plasma display panel (PDP) are being installed in conference rooms and classrooms. Compared to a beam projector, a large format display has an advantage of greater brightness so that people can easily view an image output from a personal computer (PC) to the display, even in a bright conference room. In addition, these large format displays also provide higher resolution so that the displayed image has greater detail. Due to these advantages, large format displays are now widely used in conference rooms and classrooms. Nevertheless, a laser pointer that would have been easily seen when using a beam projector cannot be seen easily on the large format display.

In order to resolve this problem, technology for displaying a virtual pointer on the large format display has been developed. However, this technology is limited to a system that utilizes only one screen. There are many cases where a user uses more than one screen. Conventionally, use of a virtual pointer assumes that a spatial input apparatus for allowing an absolute pointing is used in only one display apparatus. There is no consideration of cases where a plurality of display apparatuses are connected. Therefore, there exists a problem of the virtual pointer being displayable on only the one display apparatus, even when a plurality of display apparatuses are connected to the computing apparatus.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

### SUMMARY

Exemplary embodiments overcome the above disadvantages and possibly other disadvantages not described above. Also, an exemplary embodiment is not required to overcome the disadvantages described above, and an exemplary embodiment of the present inventive concept may not overcome any of the problems described above. For instance, an exemplary embodiment might simply provide an alternative to existing methods or apparatus.

One or more exemplary embodiments provide a computing apparatus configured to display and control a virtual pointer even in an environment where a plurality of display apparatuses are used (e.g. to form a larger, virtual, display screen), and a method for controlling the computing apparatus, and a multi-display system thereof.

According to the present invention there is provided an apparatus and method as set forth in the appended claims. Other features of the invention will be apparent from the dependent claims, and the description which follows.

According to an aspect of an exemplary embodiment, there is provided a method for controlling a computing apparatus, the method including determining a size of a virtual display screen formed by a plurality of display apparatuses connected to the computing apparatus; setting an initial position of a pointer associated with a pointing apparatus; determining a movement range of the pointing apparatus based on the size of the virtual display screen and the initial position of the pointer; and in response to receiving movement information about movement of the pointing apparatus within the movement range, controlling the plurality of display apparatuses to display the pointer in a corresponding portion of the virtual display screen.

The determining the size of the virtual display screen may include receiving connection and resolution information about a connection relationship and resolution of the plurality of display apparatuses; and determining a length and width of the virtual display screen based on the connection and resolution information.

The setting the initial position of the pointer may include selecting one of the plurality of display apparatuses according to a user command; and setting a central point of a screen of the selected display apparatus as the initial position of the pointer.

The determining the movement range of the pointing apparatus may include: determining maximum up, maximum down, maximum left, and maximum right distances that the pointer may move within the virtual display screen relative to the initial position of the pointer; and determining the movement range of the pointing apparatus based on the maximum up, maximum down, maximum left, and maximum right distances.

The method may further include mapping a movement angle of the pointing apparatus and a pixel of the virtual display screen; and controlling the plurality of display apparatuses to display the pointer on the pixel mapped with the movement angle of the pointing apparatus.

The method may further include controlling, in response to the pointing apparatus having moved such that the pointer moves outside the computed movement range, the plurality of display apparatuses to display the pointer on a final position of the pointer, to remove the pointer, or to track the movement of the pointer using a pixel in the virtual display that is nearest the pointer.

The method may further include controlling, in response to the pointing apparatus having moved such that the pointer moves to an area on the virtual display screen where the pointer cannot be displayed, the plurality of display apparatuses to display the pointer on a final position of the pointer, to remove the pointer, or to track the movement of the pointer using a pixel in the virtual display that is nearest the pointer.

According to an aspect of another exemplary embodiment, there is provided a computing apparatus including a communicator configured to receive data from an external apparatus, and transmit data to the external apparatus; and a controller configured to determine a size of a virtual display screen being formed by a plurality of display apparatuses connected with the computing apparatus, set an initial position of a pointer associated with a pointing apparatus, determine a movement range of the pointing apparatus based on a size of the virtual display screen and the initial position of the pointer, and control, in response to the communicator receiving movement information about movement of the pointing apparatus made within the movement range, the plurality of display apparatuses to display the pointer at a location within the virtual screen that corresponds to the movement of the pointing apparatus.

The controller may be further configured to control the communicator to receive connection and resolution information about a connection relationship and resolution of the plurality of display apparatuses, determine a length and width of the virtual display screen based on the connection and resolution information, and determine a size of the virtual display screen.

The controller may be further configured to select one of the plurality of display apparatuses according to a user command, and set a central point of a screen of the selected display apparatus as the initial position of the pointer.

The controller may be further configured to determine maximum up, maximum down, maximum left, and maximum right distances that the pointer may move relative to the initial position of the pointer based on the size of the virtual display screen and the initial position of the pointer, and determine a movement range of the pointing apparatus based on the determined maximum up, maximum down, maximum left, and maximum right distances.

The controller may be further configured to map a movement angle of the pointing apparatus and a pixel of the virtual display screen, and control the plurality of display apparatuses connected with the computing apparatus to display the pointer on the pixel mapped with the movement angle of the pointing apparatus.

The controller may be further configured to control, in response to the pointing apparatus having moved such that the pointer moves outside the movement range, the plurality of display apparatuses to display the pointer on a final position of the pointer, to remove the pointer, or to track the movement of the pointer using a pixel in the virtual display that is nearest the pointer.

The controller may be further configured to control, in response to the pointing apparatus having moved such that the pointer moves to an area on the virtual display screen where the pointer cannot be displayed, the plurality of display apparatuses to display the pointer on a final position of the pointer, to remove the pointer, or to track the movement of the pointer using a pixel in the virtual display that is nearest the pointer.

According to an aspect of another exemplary embodiment, there is provided a multi-display system including: a computing apparatus; a pointing apparatus configured to sense a movement and transmit movement information about the movement to the computing apparatus; and a plurality of display apparatuses connected with the computing apparatus and configured to display a pointer associated with the pointing apparatus, wherein the computing apparatus is configured to determine a size of a virtual display screen formed by the plurality of display apparatuses, set an initial position of the pointer, determine a movement range of the pointing apparatus based on the size of the virtual display screen and the initial position of the pointer, and control, in response to the pointing apparatus having sensed the movement made within the movement range and transmitted the movement information, the plurality of display apparatuses to display the pointer in accordance with the movement information.

According to an aspect of another exemplary embodiment, there is provided a multi-display system including: a main display apparatus; a pointing apparatus configured to sense a movement and transmit movement information about the movement to the main display apparatus; and at least one sub display apparatus connected with the main display apparatus and configured to display a pointer; wherein the main display apparatus is configured to determine a size of a virtual display screen formed by the main display apparatus and the at least one sub display apparatus, set an initial position of the pointer, determine a movement range of the pointing apparatus based on the size of the virtual display screen and the initial position of the pointer, and in response to the pointing apparatus transmitting movement information indicating movement within the movement range, either display the pointer or control the at least one sub display apparatus to display the pointer in accordance with the movement information.

According to an aspect of another exemplary embodiment, there is provided a computing apparatus including: a communicator configured to communicate with a pointing apparatus and a virtual display formed by a plurality of display apparatuses including a first display apparatus and a second display apparatus; and a controller configured to cause a pointer associated with the pointing apparatus to be displayed on the virtual screen such that in response to the pointing apparatus pointing toward the first display apparatus, the pointer is displayed at a corresponding location on the first display apparatus, and in response to the pointing apparatus pointing toward the second display apparatus, the pointer is displayed at a corresponding location on the second display apparatus.

In response to the pointer moving outside of a displayable area within the virtual screen, the controller may be further configured to cause the pointer to be displayed at a last displayable location within the virtual screen, to stop being displayed, or to be displayed on at a displayable location that is nearest the pointer.

In response to the pointing apparatus being rolled on a roll axis, the pointer being displayed on the virtual screen may roll.

The controller may be further configured to determine a maximum distance within the virtual screen that the pointer may move relative to an initial position of the pointer.

The first display apparatus may include the computing apparatus.

The controller may be further configured to determine a movement range of the pointer within a width direction of the virtual screen such that a vector from a left end of the virtual screen to the pointing apparatus intersects with a vector from a right end of the virtual screen to the pointing apparatus to form an angle that defines the movement range of the pointer in the width direction of the virtual screen.

### BRIEF DESCRIPTION OF THE DRAWINGS

The above and/or other aspects will be more apparent by describing certain exemplary embodiments with reference to the accompanying drawings, in which:
FIG. 1 is a view illustrating a multi-display system according to an exemplary embodiment;
FIGs. 2 and 3 are block diagrams for explaining a configuration of a computing apparatus according to various exemplary embodiments;
FIG. 4 is a block diagram for explaining a configuration of a display apparatus according to an exemplary embodiment;
FIG. 5 is a block diagram for explaining a configuration of a pointing apparatus according to an exemplary embodiment;
FIGs. 6A and 6B are views for explaining a problem of the related art;
FIG. 7 is a view for explaining a method for computing a size of a virtual display screen according to an exemplary embodiment;
FIG. 8 is a view for explaining a situation where an initial position of a pointer is set to a central point of a screen of either one of two display apparatuses;
FIGs. 9A and 9B are views for explaining a multi-display system including a wireless dongle according to an exemplary embodiment;
FIGs. 10 and 11 are flowcharts for explaining a method for controlling a computing apparatus according to various exemplary embodiments;
FIG. 12 is a sequence view for explaining an operation of a multi-display system according to an exemplary embodiment; and
FIG. 13 is a view illustrating a multi-display system consisting of a main display apparatus and one or more sub display apparatuses according to an exemplary embodiment.

### DETAILED DESCRIPTION

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

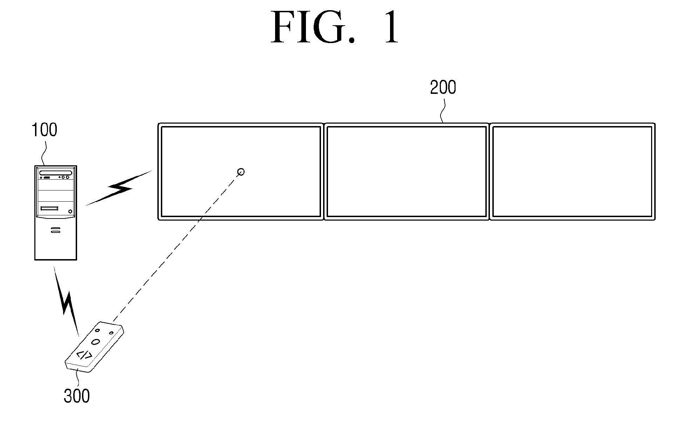

FIG. 1 is a view illustrating a multi-display system according to an exemplary embodiment. Referring to FIG. 1, the multi-display system includes three display apparatuses forming a virtual screen 200, of course the virtual screen can be formed by any two or more display apparatus, a pointing apparatus 300, and a computing apparatus 100.

The plurality of display apparatuses forming the virtual screen 200 are connected to the computing apparatus 100 and display a pointer on a screen in accordance with pixel information etc. provided from the computing apparatus 100. The plurality of display apparatuses may be, but without limitation, a plurality of LCD large format displays, of course the plurality of display apparatus do not have to be the same kind of display. The virtual screen 200 may be formed by various kinds of apparatuses having a display unit such as a monitor, PC, and electronic picture frame.

The pointing apparatus 300 receives a user's input, senses movement information used to control a virtual point displayed the virtual screen 200 formed by the display apparatuses 200, and transmits the user's input and movement information the computing apparatus 100.

The computing apparatus 100 determines a size of the virtual display screen 200 based on a connection relationship between the plurality of display apparatuses and a resolution of the display apparatuses. The computing apparatus 100 sets an initial position of the pointer, and computes a movement range of the pointing apparatus 300, which indicates the boarders of the virtual screen 200. The computing apparatus 100 permits the virtual pointer to be displayed across the screens of the plurality of display apparatuses in accordance with a movement of the pointing apparatus 300.

Thus, even when a plurality of display apparatuses are connected to one computing apparatus, a user may, using the aforementioned multi-display system, display and manipulate a pointer across screens of the plurality of display apparatuses.

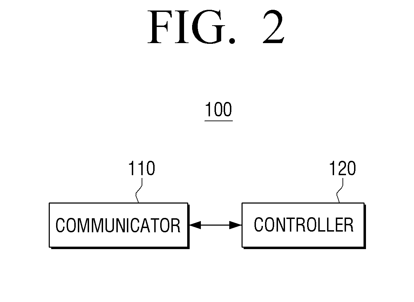

FIG. 2 is a schematic block diagram illustrating a configuration of the computing apparatus 100 according to an exemplary embodiment. Referring to FIG. 2, the computing apparatus 100 includes a communicator 110 and controller 120. The computing apparatus 100 may be, but without limitation, a PC, a notebook PC, a tablet PC, and in a case where a display apparatus such as a smart TV has a computing function embedded therein, the computing apparatus 100 may be, without limitation, embodied inside the display apparatus itself.

The communicator 110 performs a function of receiving/transmitting data to/from an external apparatus. Specifically, the communicator 110 has wireless communication modules and performs wireless communication with the external apparatus. The communicator 110 receives an on signal from the external apparatus, and transmits a signal generated from the computing apparatus 100.

The controller 120 controls an overall configuration of the computing apparatus 100. The controller 120 computes a size of a virtual display screen 200 being formed by the plurality of display apparatuses connected to the computing apparatus 100, and sets an initial position of a pointer, computes a movement range of a pointing apparatus 300 based on the size of the virtual display screen 200 and the initial position of the pointer, and in response to the communicator 110 receiving movement information of the pointing apparatus 300 made within the computed movement range, the controller 120 controls the plurality of display apparatuses connected to the computing apparatus 100 to display the pointer in accordance with the movement of the pointing apparatus 300.

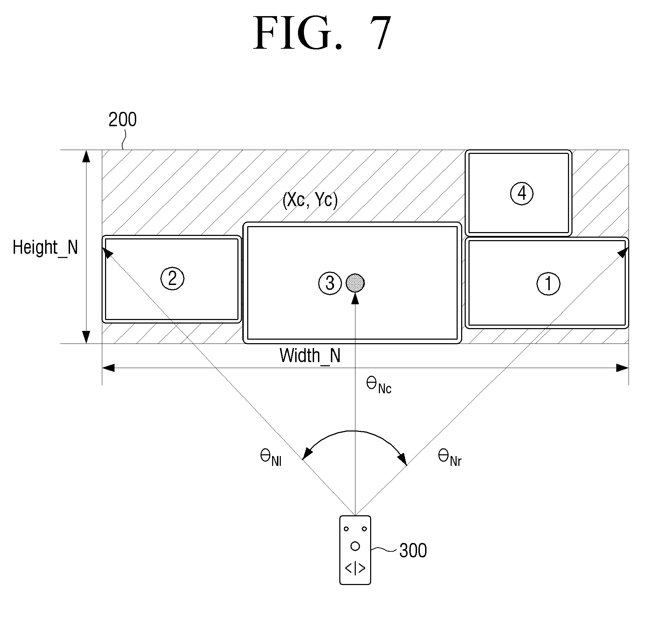

The controller 120 may control the communicator 110 to receive connection information about a connection relationship of the plurality of display apparatuses connected with the computing apparatus 100 and resolution information about a resolution of each of the plurality of display apparatuses . The controller 120 computes a length and width of the virtual display screen to compute the size of the virtual display screen based on the connection information about the connection relationship and the resolution information about the resolution of the plurality of display apparatuses . As shown in FIG. 7, the virtual display screen 200 may be a rectangular virtual screen capable of including all the plurality of display apparatuses. Therefore, even when the user is using a same number of display apparatuses, the size of the virtual display screen 200 may be different if the connection relationship between the display apparatuses is different.

Referring back to FIG. 2, in response to a user's command, the controller 120 may select one of the plurality of display apparatuses , and set a central point of the screen of the selected display apparatus as an initial position of the pointer. However, the central point of the screen of the selected display apparatus may not necessarily be set as the initial position of the pointer. According to another exemplary embodiment, the controller 120 may set any point on the display apparatus screen that the user wants as the initial position of the pointer.

Furthermore, the controller 120 may determine a maximum up down left right distances that the pointer may move based on the size of the virtual display screen 200 and the initial position of the pointer. Furthermore, the controller 120 may compute a movement range of the pointing apparatus 300 based on the predetermined maximum up down left right distances from the initial position of the pointer. Specifically, the predetermined maximum up down left right distances may be expressed in a length such as a number of pixels, and the movement range of the pointing apparatus 300 may be expressed as an angle. The controller 120 may convert the length and angle according to a same ratio.

Furthermore, the controller 120 may map the movement angle of the pointing apparatus 300 and a pixel of the virtual display screen 200, and control the plurality of display apparatuses connected with the computing apparatus 100 to display the pointer on the pixel mapped to the movement angle of the pointing apparatus 300. Of course, the pixel may be a group of pixels forming any shape at any size. For example, the pointer may be shaped as an arrow and the pointing apparatus 300 may transmit roll information, yaw information, and/or pitch information so that the arrow shaped pointer is rotated on the virtual screen 200.

In an exemplary embodiment, when the pointing apparatus 300 moves such that the pointer moves outside the computed movement range, the controller 120 may control the plurality of display apparatuses connected with the computing apparatus 100 to display the pointer on a final position of the pointer when it was within the virtual display screen 200 or to remove the pointer. In another exemplary embodiment, when the pointing apparatus 300 moves such that the pointer moves to an area on the virtual display screen where the pointer cannot be displayed (e.g., the hatched areas in FIG. 7), the controller 120 may control the plurality of display apparatuses connected with the computing apparatus 100 to display the pointer on the final position of the pointer, to remove the pointer, to track the movement of the pointer along a boarder of the nearest display apparatus, etc. Herein, the area on the virtual display screen where the pointer cannot be displayed may be an empty area inside a virtual rectangle representing the virtual display screen where the plurality of display apparatuses do not exist. Of course, the virtual dot may be split amongst two or more of the display apparatuses, when the pointer cannot be displayed on an empty area (e.g., a bezel).

Using the aforementioned computing apparatus 100, the user may easily move the pointer where he/she wants across a plurality of display apparatuses, just as when using just one display apparatus.

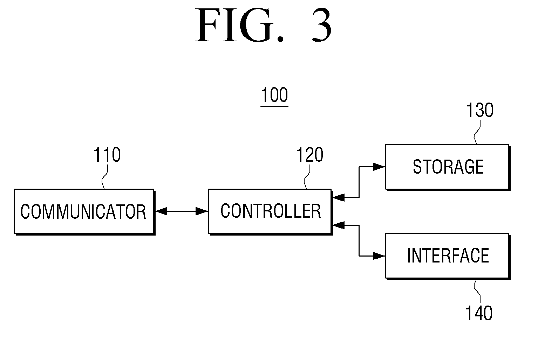

FIG. 3 is a block diagram illustrating the configuration of the computing apparatus 100 in more detail. Referring to FIG. 3, the computing apparatus 100 includes the communicator 110, controller 120, storage 130 and interface 140.

The communicator 110 performs a function of receiving/transmitting data to/from an external apparatus such as the pointing apparatus 300. Specifically, the communicator 110 has wireless communication modules and performs wireless communication with the external apparatus. The communicator 110 may be connected to the plurality of display apparatuses, and receive connection information about a connection relationship between the display devices and resolution information about a resolution of the plurality of display apparatuses. Furthermore, the communicator 110 may transmit pixel information for displaying the pointer to the plurality of display apparatuses. Furthermore, when the pointing apparatus 300 is in wireless communication with the communicator 110, the communicator 110 may receive movement information of the pointing apparatus 300. The wireless communication method that the communicator 110 uses may be, for example, one of an IR (InfraRed) communication, ZigBee communication, Bluetooth communication, Wi-Fi communication, etc. According to an exemplary embodiment, the communicator 110 may be included in a wireless dongle 900 separated from the computing apparatus 100. When the communicator 110 is included in the wireless dongle 900, the communicator 110 performs wireless communication with the plurality of display apparatuses and pointing apparatus 300, and also communicates with the computing apparatus 100.

The storage 130 is a memory that stores various programs and data for operating the computing apparatus 100. For example, the controller 120 may set the connection relationship of the plurality of display apparatuses using software stored in the storage 130 regardless of the physical arrangement of the display devices. In order to designate an initial position of the pointer, the controller 120 may perform a function of selecting one of the plurality of display apparatuses using the software stored in the storage 130. The storage 130 may be included in the wireless dongle 900 separate from the computing apparatus 100. The storage 130 may be a random access memory (RAM) and/or read-only memory (ROM). The ROM plays a role of transmitting data and commands to a central processing unit (CPU) uni-directionally, while the RAM is used to transmit data and commands bi-directionally.

The interface 140 enables the computing apparatus 100 to transmit/receive commands to/from the user. For example, the interface 140 may be a key pad, touch screen, remote controller, mouse, etc., associated with the computing apparatus 100. According to an exemplary embodiment, the user may move the pointer on the virtual display screen using a mouse and so forth only or together with using the pointing apparatus 300.

The controller 120 controls the communicator 110, storage 130, and interface 140. The controller 120 may include the ROM and RAM that store modules and data for controlling the CPU and computing apparatus 100.

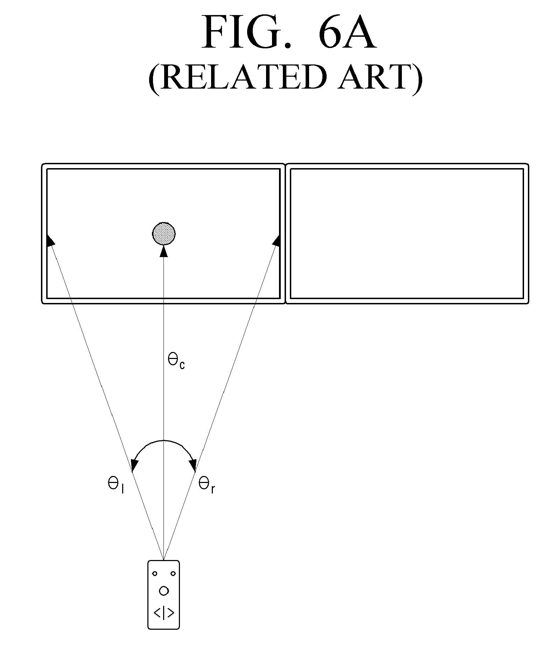

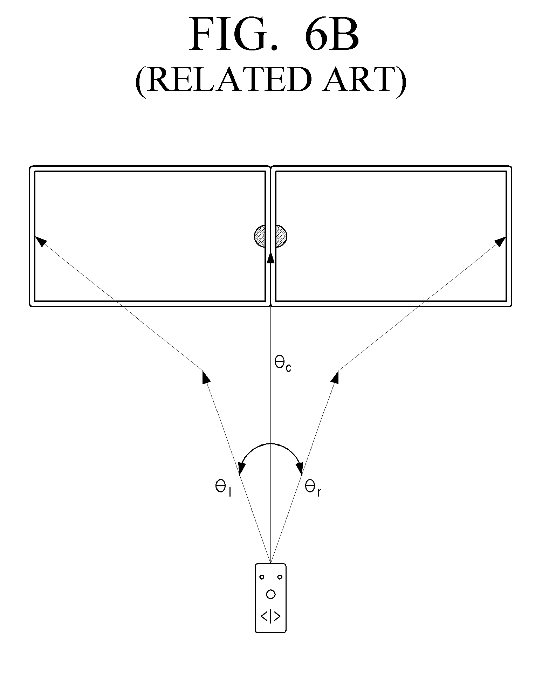

The inventors recognized that with a system such as that shown in FIG. 6A, even when a multi-display apparatus is connected to the computing apparatus 100, the user is only able to move the pointer across on the displays (e.g., the first display connected to the computing apparatus 100). Referring to FIG. 6B, even when a multi-monitor is provided, the movement range of the pointing apparatus 300 and the size of the screen of the multi-display screen may not be appropriately mapped unless a virtual display screen is configured, making it difficult for the user to perform a pointer manipulation intuitively. As shown in FIG. 6B there the movement range in the width direction of the virtual screen cannot be calculated by ascertaining an angle at an intersection of a vector from a left end of the virtual screen to the pointing apparatus and a vector from a right end of the virtual screen to the pointing apparatus. In order to overcome this problem, an exemplary controller 120 controls the computing apparatus as follows: the controller 120 computes a size of a virtual display screen 200 formed by the plurality of display apparatuses connected with the computing apparatus 100, sets an initial position of the pointer, computes a movement range of the pointing apparatus 300 based on the size of the virtual display screen and the initial position of the pointer, and when the communicator 110 receives information on movement of the pointing apparatus 300 made within the computed movement range, controls the plurality of display apparatuses connected to the computing apparatus 100 to display the pointer in accordance with the movement of the pointing apparatus 300.

The controller 120 may determine a connection relationship of the plurality of display apparatuses connected with the computing apparatus 100 and a resolution of each of the plurality of display apparatuses. The controller 120 may compute a length and width of the virtual display screen 200 based on the connection relationship and resolution of the plurality of display apparatuses and compute the size of the virtual display screen. As illustrated in FIG. 7, the virtual display screen may be a screen of a minimum size rectangle that may include all the plurality of display apparatuses . For example, assuming that the screen size of display apparatus ① of FIG. 7 is 1440×810, the screen size of display apparatus ② is 1024×576, the screen size of display apparatus ③ is 1920×1080, and the screen size of display apparatus ④ is 800×600, the width of the virtual display screen will be 4384, that is the sum of the widths of display apparatuses ①, ② and ③. The length of the virtual display screen will not be a sum of the lengths of all the display apparatuses, but a sum of the lengths of the display apparatuses with superposed portions excluded. Meanwhile, the user may not necessarily connect the plurality of display apparatuses in parallel with one another in a height or width direction. As illustrated in FIG. 7 where 3 display apparatuses are arranged widthwise while 2 display apparatuses are arranged heightwise, the user may connect the plurality of display apparatuses in any format he/she wants. Furthermore, as aforementioned, using the software stored in the storage 130, the user may set the connection relationship of the plurality of display apparatuses . Therefore, the user may set the virtual display screen regardless of the physical arrangement of the plurality of display apparatuses. For example, even when the user is using a same number of display apparatuses, the size of the virtual display screen may be different if the connection relationship between the display apparatuses is set differently. Meanwhile, the size of the virtual display screen may be computed in consideration of the gap between the display apparatuses and the thickness of the bezels those are set by the user.

Furthermore, as illustrated in FIG. 7, a movement range of the pointer within a width direction of the virtual screen is defined by a first vector from a left end of the virtual screen 200 to the pointing apparatus 300 and a second vector from a right end of the virtual screen 200 to the pointing apparatus. The angle at the intersection of the first and second vectors defines the movement range of the pointer in the width direction of the virtual screen.

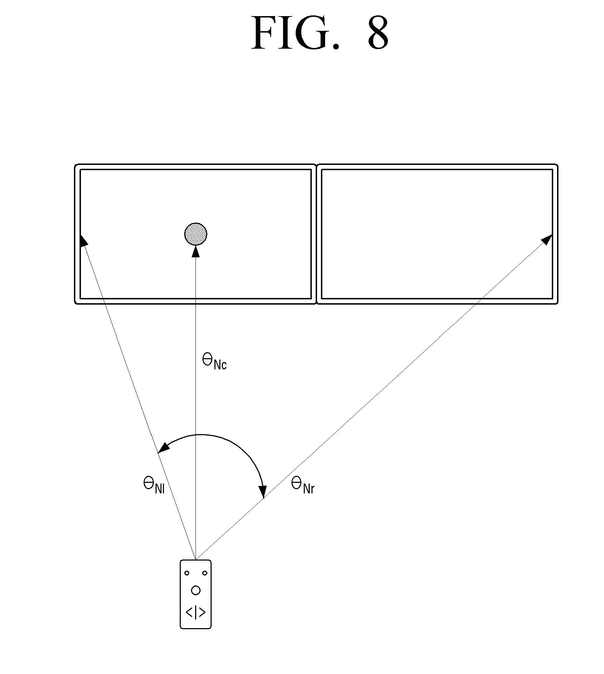

Furthermore, the controller 120 may select one of the plurality of display apparatuses according to the user's command, and may set a central point of a screen of the selected display apparatus as an initial position of the pointer. For example, as illustrated in FIG. 8, in a case where a display apparatus at a left side of two display apparatuses is selected according to a user's command, the controller 120 may set a central point of a screen of the selected left side display apparatus as an initial position of the pointer. However, the central point of the screen of the selected display apparatus may not necessarily be set as the initial position of the pointer. For example, the controller 120 may set a point that the user wants on a display apparatus screen as the initial position of the pointer. The controller 120 selects one of the plurality of display apparatuses according to a user's command. When the user designates a point that he/she wants on the selected display apparatus, the controller 120 may set the point selected by the user as the initial position of the pointer. Herein, the user may set the point that he/she wants as the initial position of the pointer by displaying the pointer on the selected display apparatus, and moving the pointer to the wanted point through the pointer apparatus 300 or interface 140. However, the method for setting the initial position of the pointer is not limited to the aforementioned methods.

Furthermore, the controller 120 may determine maximum up down left right distances that the pointer may move based on the size of the virtual display screen 200 and the initial position of the pointer. Furthermore, the controller 120 may compute the movement range of the pointing apparatus 300 based on the predetermined maximum up down left right distance. In the case where an initial position is set on left side display apparatus on a virtual display screen consisting of two display apparatuses as illustrated in FIG. 8, the controller 120 determines maximum up down left right distances that the pointer may move with reference to the initial position of the pointer on the left side display apparatus. For example, it will be determined that the maximum left side distance that the pointer may move in FIG. 8 is shorter than the maximum right side distance. Since each of the maximum up down left right distances is determined, the central point of the virtual display screen may not necessarily be set as the initial point of pointer. If only the central point of the display screen could be set as the initial position of the pointer, the maximum left and maximum right distances that the pointer may move will be the same, and the maximum up and maximum down distances that the pointer may move will also be the same. In such a case, there is an advantage that the controller 120 may easily determine the maximum distances that the pointer may move, but there is a disadvantage that the user cannot set the position he/she wants as the initial position of the pointer. However, by allowing the controller 120 to determine each of the maximum up down left right distances, the computing apparatus 100 may provide convenience to the user.

Furthermore, when computing the movement range of the pointing apparatus 300 through the predetermined maximum up down left right distances that the pointer may move, the controller 120 may compute the movement range in response to a user input through a button 310 of the pointing apparatus 300. When using the pointing apparatus 300 using an absolute pointing method, the location of the pointing apparatus 300 and the location of the virtual display screen are directly mapped, and thus for the user to have a more satisfying experience, the direction that the pointing apparatus 300 is pointing and the initial location of the pointer should correspond to each other. By matching the direction that the pointing apparatus 300 is pointing with the initial position of the pointer and then computing the movement range in response to the user pressing the input button, the direction that the pointing apparatus 300 is pointing will correspond to the location of the pointer displayed on the virtual display screen 200, enabling the user to manipulate the pointer more intuitively.

Furthermore, the controller 120 may map the movement angle of the pointing apparatus 300 and the pixel of the virtual display screen 200, and control the plurality of display apparatuses connected to the computing apparatus 100 to display the pointer on the pixel (or pixel group) mapped to the movement angle of the pointing apparatus 300. Specifically, since the movement of the pointing apparatus 300 is represented by angle and the movement of the pointer of the virtual display screen is represented by length, the controller 120 must map the movement angle of the pointing apparatus 300 and the distance on the virtual display screen. The controller 120 may compute the movement range of the pointing apparatus 300 and the size of the virtual display screen 200 and map the same. For example, the controller 120 may perform the mapping by calculating the length of the virtual display screen 200 in the width direction (e.g., Width_N in FIG. 7) and the left right angle that the pointing apparatus 300 may move in a same ratio. When the pointing apparatus 300 is moved to the left side by a certain angle, the controller 120 converts a distance calculated based on the ratio into a number of pixels, and moves the pointer to the left side as many as the corresponding number of pixels on the virtual display screen 200.

However, there is no limitation to accepting location information such as the size or resolution of the plurality of display apparatuses. Besides the method for computing the size of the virtual display screen 200 together with the resolution of the plurality of display apparatuses and determining the movement range based on the initial position of the pointer and the computed size of the virtual display screen, there may be various methods for determining the movement range of the pointing apparatus 300. For example, the controller 120 may consider the distance between the pointing apparatus 300 and the plurality of display apparatuses and determine the movement range of the pointing apparatus 300. In another example, any point of the display apparatus that is the closest to the pointing apparatus 300 of the plurality of display apparatuses may be set as the initial position of the pointer. Since inputting location information and mapping with the movement angle may be performed using various methods, the method of the controller 120 controlling the computing apparatus 100 is not be limited to the methods presented in this specification.

According to an exemplary embodiment, when the pointing apparatus 300 moved such that the pointer moves outside the computed movement range, the controller 120 may control the plurality of display apparatuses connected to the computing apparatus 100 to display the pointer on the final position of the pointer before the pointer moved outside of the displayable area, to remove the pointer, to track the movement of the pointer along a nearest displayable area, etc. For example, when the pointing apparatus 300 moved towards outside the computed movement range, there is no corresponding pixel on the virtual display screen. In this case, the controller 120 may control the plurality of display apparatuses not to display the pointer, to display the pointer on the pixel displayed the last, to display the pointer on a nearest pixel or group of pixels. In another exemplary embodiment, when the pointing apparatus 300 is moved such that the pointer moves to an area on the virtual display screen where the pointer cannot be displayed (or even off the virtual screen), the controller 120 may control the plurality of display apparatuses connected to the computing apparatus 100 to display the pointer on the final position of the pointer, to remove the pointer, to track the movement of the pointer along the nearest pixel. Herein, the area on the virtual display screen where the pointer cannot be displayed may be an empty area inside a virtual rectangle representing the virtual display screen where the plurality of display apparatuses do not exist. For example, referring to FIG. 7, the area on the virtual display screen having deviant crease lines excluding the area occupied by display apparatuses ①, ②, ③ and ④ becomes the area where the pointer cannot be displayed. In another example, one of the plurality of display apparatuses may be selected, and the controller may set the area on the virtual display screen occupied by the selected display apparatus as the area where the pointer cannot be displayed. For example, contents that must not be visually interrupted may be displayed on a certain display apparatus. In order to avoid interruption caused by movement of the pointer, the controller 120 may set the area occupied by the display apparatus where the contents that must not be interrupted visually as the area where the pointer cannot be displayed. For example, in FIG. 7, the user may set display apparatus ④ not to display the pointer. In another exemplary embodiment, it is possible to select one of the plurality of display apparatuses and set such that the pointer is displayed on the selected display apparatus only. For example, referring to FIG. 7, an orchestra performance screen may be displayed on display apparatuses ② and ③, and a musical note may be displayed on the remaining display apparatuses ① and ④. Herein, in order to explain the musical note corresponding to the performance without interrupting viewing the orchestra performance screen, the user may set such that the pointer is displayed on display apparatuses ① and ④ only. In such a case, the area occupied by the display apparatuses other than the one or more selected display apparatuses will be set as the area where the pointer cannot be displayed.

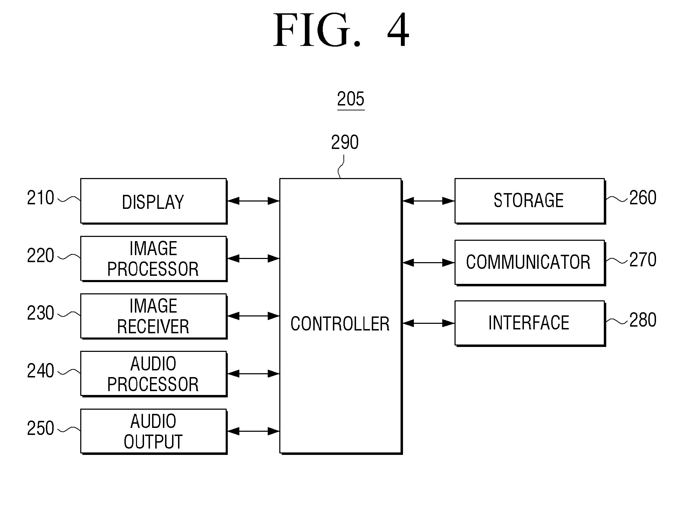

FIG. 4 is a block diagram illustrating a configuration of the plurality of display apparatuses according to an exemplary embodiment. Referring to FIG. 4, a display apparatus 205 used in the virtual display screen 200 includes a display 210, image processor 220, image receiver 230, audio processor 240, audio output 250, storage 260, communicator 270, interface 280, and controller 290.

The display 210 displays an image signal input from various sources including the computing apparatus 100. For example, the display 210 may display an image corresponding to the image signal received through the image receiver 230. The display 210 may be designed as one of various display panels. That is, the display 210 may be embodied by various display technologies including OLED (Organic Light Emitting Diodes), LCD (Liquid Crystal Display Panel), PDP (Plasma Display Panel), VFD(Vacuum Fluorescent Display), FED(Field Emission Display), and ELD(Electro Luminescence Display). The display panel may be an light emitting type, but reflective type displays (E-ink, P-ink, Photonic Crystal) are not excluded. Furthermore, the display panel may be embodied as a flexible display or transparent display etc.

The image processor 220 processes a signal regarding image information configuration contents. When a stream signal is received, the image processor 220 may demultiplex the stream signal, and divide it into an image signal, sound signal, and data signal. In a case where the demultiplexed image signal is an encoded image signal, the image processor 220 performs decoding using a decoder. For example, the image processor 220 may decode an encoded image signal of MPEG-2 standard using a n MPEG-2 decoder, or decode an image signal of Digital Multimedia Broadcasting (DVB) or H.264 of DVB-H standard using an H.264 decoder. Furthermore, the image processor 220 may process a brightness, tint, or color of the image signal.

The image receiver 230 receives the stream signal and transmits the stream signal to the controller 290 or image processor 220.

The audio processor 240 performs various audio signal processing such as audio decoding, noise filtering, and amplification to audio data of each of the contents, and generates an audio signal. The audio signal generated in the audio processor 240 is provided to the audio output 250.

The audio output 250 outputs the audio signal generated in the audio processor 240. The audio output 250 may be integrated with or separated from the display apparatus 205. In a case of a separated audio output 250, the output 250 is connected to the display apparatus 205 either through a wire or wirelessly.

The storage 260 stores various programs and data used for operating the display apparatus. Furthermore, the storage 260 may include a RAM (random access memory) and ROM(read-only memory). The ROM plays a role of transmitting data and commands to a CPU uni-directionally, and the RAM is used to transmit data and commands bi-directionally.

The communicator 270 consists of a wireless communication module and performs wireless communication with an external apparatus. The communicator 270 may transmit information on a connection relationship and resolution of the plurality of display apparatuses forming the virtual display screen 200 to the computing apparatus 100. Furthermore, the communicator 270 may receive pointer information for displaying the pointer on one or more pixels in the virtual display screen 200. The wireless communication method used by the communicator 270 may be one of an IR (InfraRed) communication, ZigBee communication, Bluetooth communication, and Wi-Fi communication.

The interface 280 enables the display apparatus 205 and the user to receive and transmit commands between one another. For example, the interface 280 may be a keypad, touch screen, remote controller, or mouse.

The controller 290 controls other components of the display apparatus 205 such as the display 210 and communicator 270. The controller 290 may include a ROM and RAM for storing a module and data for controlling the CPU the display apparatus 205.

The controller 290 may control the communicator 270 to transmit the connection relationship and resolution of the plurality of display apparatuses to the computing apparatus 100. The controller 290 may control the communicator 270 to receive, from the computing apparatus 100, pointer information describing which of the one or more pixels to display the pointer. Furthermore, the controller 290 may control the display 210 to display the pointer using the pointer information received from the computing apparatus 100.

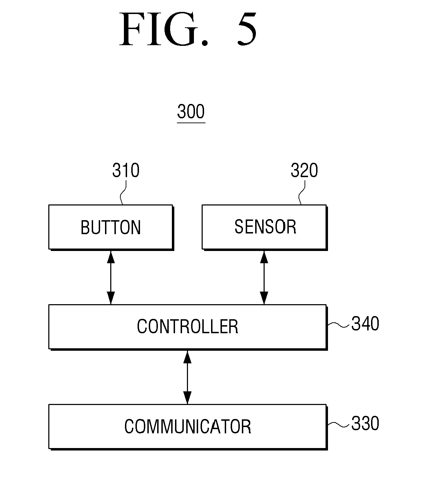

FIG. 5 is a block diagram illustrating a configuration of a pointing apparatus 300 according to an exemplary embodiment. Referring to FIG. 5, the pointing apparatus 300 includes a button 310, sensor 320, communicator 330 and controller 340.

The button 310 receives a button input of the pointing apparatus 300 from the user. The button may be configured as a general tactile button, touch button, or a button where a two-step input may be made. Furthermore, the button 310 may include a button corresponding to a function needed during presentations such as turning a page in a presentation material. In an exemplary embodiment, the button 310 may receive a user's input for starting computation of the movement range of the pointing apparatus 300. When the user's input is made through the button 310, the controller 240 transmits a signal indicating that the user's input has been made and to start computing the movement range. This signal is transmitted to the computing apparatus 100 through the communicator 330.

The sensor 320 senses movement of the pointing apparatus 300. The sensor 320 may include an angular velocity sensor (gyroscope), acceleration sensor, and geomagnetic sensor. The acceleration sensor senses velocity change amount per unit time. The acceleration sensor may be embodied to have three axes. In a case of a three axis acceleration sensor, the sensor is provided with X, Y, and Z axes acceleration sensors that each orthogonal to one another. The angular velocity sensor senses an amount of change of the pointing apparatus 300 in a preset direction during a unit of time and senses an angular velocity. The geomagnetic sensor is a sensor capable of detecting a flow of a magnetic field and detecting an azimuth. The geomagnetic sensor may detect an azimuth coordinate of the pointing apparatus 300, and detect a direction in which the pointing apparatus 300 is placed based on the azimuth coordinate. Using the geomagnetic sensor, the sensor 320 may modify movement information obtained through the acceleration sensor or angular velocity sensor.

The communicator 330 includes a wireless communication module and performs wireless communication with an external apparatus. The communicator 330 may transmit movement information of the pointing apparatus 300 to the computing apparatus 100. The wireless communication method used by the communicator 330 may be one of an IR (InfraRed) communication, ZigBee communication, Bluetooth communication, and Wi-Fi communication.

The controller 340 controls the button 310, sensor 320, and communicator 330 of the pointing apparatus 300. The controller 340 may include a ROM and RAM for storing a module and data for controlling a CPU and pointing apparatus 300. In a case where a user's command is input through the button 310, the controller 340 may control the communicator 330 to transmit the user's command to the computing apparatus 100. In a case where movement information of the pointing apparatus 300 is sensed through the sensor 320, the controller 340 may control the communicator 330 to transmit the sensed movement information to the computing apparatus 100.

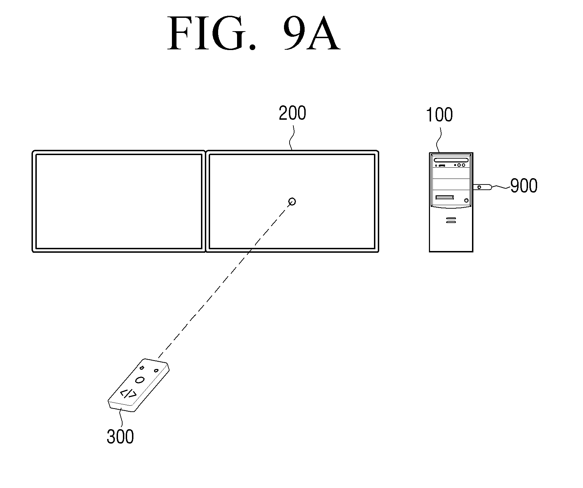

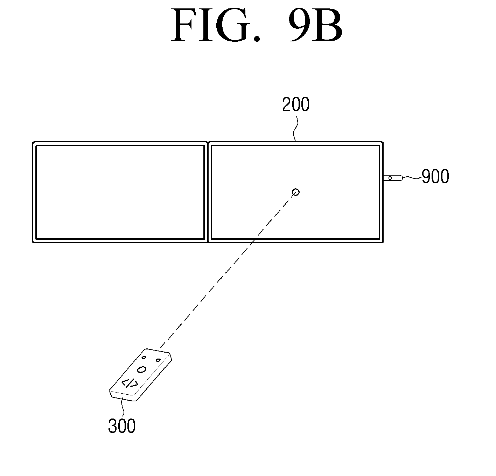

Referring to FIGs. 9A and 9B, an exemplary embodiment that includes a wireless dongle 900 will be explained. There may be provided an exemplary embodiment that includes a wireless dongle 900 that performs a wireless communication function that is one of the functions of the computing apparatus 100 and a function using a micro controller unit (MCU) engine. An MCU engine is a small computing apparatus on top of an integrated circuit. An MCU in an embedded system is a concept corresponding to a CPU of a PC. Therefore, using the MCU, the wireless dongle 900 may perform the functions that the controller 120 of the computing apparatus 100 may perform such as computing a size of the virtual display screen, setting an initial position of the pointer, and mapping a movement angle and distance of the virtual display screen. For example, the wireless dongle 900 may receive information on a connection relationship and resolution of the plurality of display apparatuses, and transmit the information to the computing apparatus 100. Furthermore, the wireless dongle 900 may receive the movement information of the pointing apparatus 300, convert it into pixel information, and transmit the pixel information to the plurality of display apparatuses. As illustrated in FIG. 9A, a multi-display system may include a computing apparatus 100, plurality of display apparatuses forming a virtual display screen 200, pointing apparatus 300 and wireless dongle 900. The wireless dongle 900 may be configured in a format of being combined with the computing apparatus 100. For example, the wireless dongle 900 may be, but without limitation, combined with the computing apparatus 100 in a universal serial bus (USB) format. In a case where a computing function is embedded in the display apparatus, as illustrated in FIG. 9B, the multi-display system may include a plurality of display apparatuses forming a virtual display screen 200, pointing apparatus 300 and wireless dongle 900. In this case, the wireless dongle 900 may be configured in a format of being directly combined with one of the display apparatuses.. When a computing function is embedded in all the plurality of display apparatuses , the wireless dongle 900 may be combined with one of the plurality of display apparatuses and perform a function.

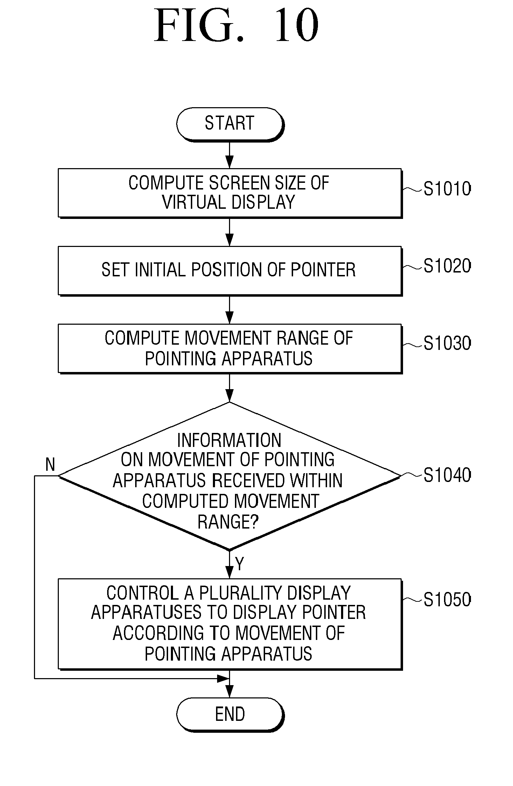

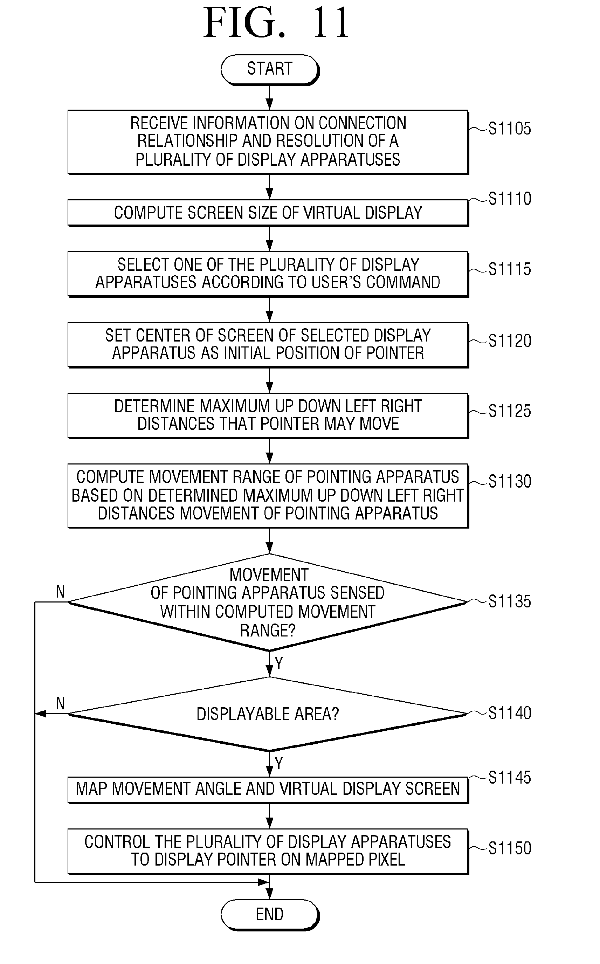

Hereinafter, a method for controlling the computing apparatus will be explained with reference to FIGs. 10 and 11.

FIG. 10 is a flowchart for explaining the method for controlling the computing apparatus according to an exemplary embodiment. The computing apparatus computes a size of a virtual display screen formed by a plurality of display apparatuses connected with the computing apparatus (S1010). Then, the computing apparatus sets an initial position of a pointer (S1020). Based on the size of the virtual display screen and the initial position of the pointer, the computing apparatus computes a movement range of the pointing apparatus (S1030). Furthermore, in response to receiving information of movement made within the computed movement range (S1040-Y), the computing apparatus controls the plurality of display apparatuses connected with the computing apparatus to display the pointer in accordance with the movement of the pointing apparatus (S1050).

FIG. 11 is a flowchart for explaining another method for controlling the computing apparatus. The computing apparatus receives connection information about a connection relationship and resolution information about a resolution of a plurality of display apparatuses connected with the computing apparatus (S1105). Based on the received connection and relationship information, the computing apparatus computes a width and height of a virtual display screen, and computes a size of the virtual display screen (S1110). Furthermore, the computing apparatus selects one of the plurality of display apparatuses according to a user's command (S1115). Furthermore, the computing apparatus sets a central point of a screen of the selected display apparatus as an initial position of the pointer (S1120). Based on the size of the virtual display screen and the initial position of the pointer, the computing apparatus determines maximum up down left right distances that the pointer may move (S1125). In response to computing a movement range of the pointing apparatus based on the maximum up down left right distance (S1130) and receiving information on movement of the pointing apparatus made within the computed movement range (S1135-Y), the computing apparatus determines whether or not it is an area on the virtual display screen where the pointer can be displayed (S1140). If it is determined that it is an area where the pointer can be displayed (S1140-Y), the computing apparatus maps a movement angle and a pixel of the virtual display screen (S1145). The computing apparatus controls the plurality of display apparatuses connected with the computing apparatus to display the pointer on the mapped pixel (S1145). In response to receiving information on movement of the pointing apparatus made outside the computed movement range (S1135-N) or it being determined that the area is an area where the pointer cannot be displayed (S1140-N), the computing apparatus may control the plurality of display apparatuses to display the pointer on a final position, to remove the pointer, to track the pointer on a nearest pixel, etc.

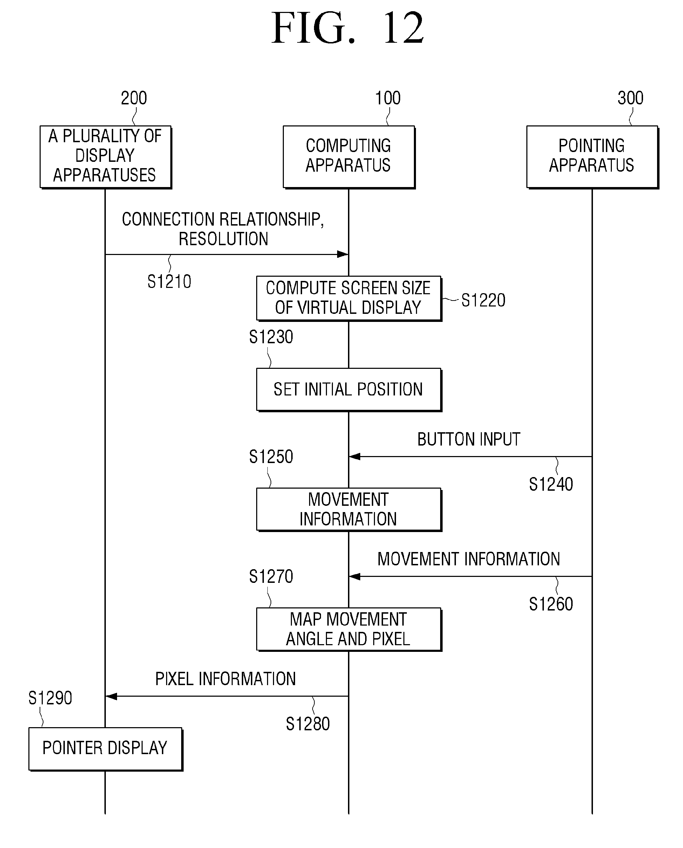

Hereinafter, a sequence of a multi-display system will be explained with reference to FIG. 12.

Referring to FIG. 12, the multi-display system may display the pointer on the plurality of display apparatuses in the following sequence. The plurality of display apparatuses transmit connection information about a connection relationship and resolution information to the computing apparatus 100 (S1210). The computing apparatus 100 computes a size of the virtual display screen based on the received connection and resolution information (S1220). Furthermore, the computing apparatus 100 sets an initial position of the pointer (S1230). In response to the user pressing a button, user input information is received from the pointing apparatus 300 (S1240), the computing apparatus 100 computes a movement range of the pointing apparatus 300 (S1250). In responses to the movement information of the pointing apparatus 300 being received from the pointing apparatus 300 (S1260), the computing apparatus 100 maps a pixel (or group of pixels) corresponding to a movement angle of the pointing apparatus 300 (S1270). The computing apparatus 100 transmits the mapped pixel information to the plurality of display apparatuses (S1280), and the plurality of display apparatuses display the pointer based on the received pixel information (S1290).

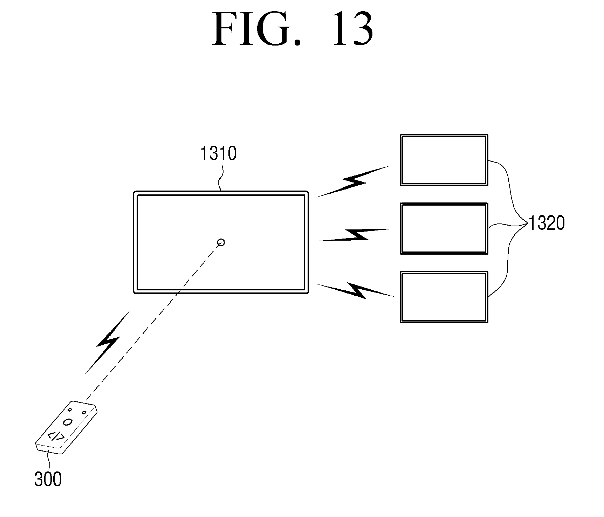

Hereinafter, an exemplary embodiment of a multi-display system consisting only of display apparatuses and a pointing apparatus 300 will be explained with reference to FIG. 13.

FIG. 13 is a view illustrating the multi-display system consisting of a main display apparatus 1310, sub display apparatus(es) 1320, and a pointing apparatus 300, according to an exemplary embodiment. When a computing function is embedded in a display apparatus such as a smart TV, the function performed by the computing apparatus 100 in the aforementioned exemplary embodiments may be performed by the main display apparatus 1310 instead. Therefore, even without the computing apparatus 100, by configuring a multi-display system, the main display apparatus 1310 may display and control a pointer on the main display apparatus 1310 itself or on at least one sub display apparatus 1320. For example, referring to FIG. 13, the multi-display system consists of a main display apparatus 1310, three sub display apparatuses 1320 and a pointing apparatus 300. The sub display apparatuses 1320 may be connected to the main display apparatus 1310 via one or more wires or wirelessly. For example, using a set top box or Wi-Fi, the sub display apparatus 1320 may be connected to the main display apparatus 1310. The main display apparatus 1310 may compute a size of the virtual display screen formed together by the sub display apparatus 1320 connected to the main display apparatus 1310. The sub display apparatus 1320 may transmit location information such as resolution to the main display apparatus 1310, and the main display apparatus 1310 may compute a size of the virtual display 200 screen based on the received location information. Furthermore, the main display apparatus 1310 may set an initial position of the pointer, and compute a movement range of the pointing apparatus 300 based on the size of the virtual display screen and the initial position of the pointer. Furthermore, when a movement is sensed within the movement range computed by the pointing apparatus 300 and transmitted, the main display apparatus 1310 may display the pointer on the main display apparatus 1310 itself or on the sub display apparatus 1320 according to the transmitted movement of the pointing apparatus 300.

In another exemplary embodiment, there may be a display system consisting of only a main display apparatus 1310. Even if another sub display apparatus 1320 is not connected, the main display apparatus 1310 may compute a size of the virtual display screen reflecting the size of the main display apparatus 1310 itself. This is the same as the conventional method used in a single display apparatus in that only the main display apparatus 1310 is used. However, since the size of the virtual display screen is computed and the movement range is determined in the same method as when there are a plurality of display apparatuses, even when a sub display apparatus 1320 is connected additionally, the display system having only the main display apparatus 1310 may be converted into a multi-display system without any complicated process. Furthermore, since a virtual display screen 200 is configured also in the display system having only the main display apparatus 1310, it is possible to create an area where the pointer cannot be displayed depending on user setting. Since the screens of display apparatuses are getting bigger, the screen of a single display apparatus could be divided into numerous sections and then used. For example, in a case of displaying an image on a left half of the screen of the main display apparatus 1310 while presenting explanation on the image on a right half of the screen, the user may set the left half of the screen of the main display apparatus 1310 as an area where the pointer cannot be displayed so as not to the interrupt viewing of the image.

Furthermore, there is no limitation to the method for mapping the movement of the pointing apparatus 300 and the coordinate of the virtual display screen. For example, the pointing apparatus 300 may communicate with the main display apparatus 1310 or computing apparatus and receive a coordinate of the virtual display screen. There may also be a method for the pointing apparatus 300 to independently compensate the pointer coordinate value of the pointing apparatus 300 being transmitted to the main display apparatus 1310 or computing apparatus 100 based on the information on the size of the virtual display screen received from the main display apparatus 1310 or computing apparatus 100 and transmitting the same. That is, in a case where there is one display apparatus, the pointing apparatus 300 operates at an angle corresponding to a width of the display apparatus at a certain location, but in a case where there are three display apparatuses, the pointing apparatus 300 may compensate the coordinate value to an angle corresponding to a width of the virtual display screen formed by the three display apparatuses at the same location and transmit the same to the main display apparatus 1310 or computing apparatus 100. In such a case, the coordinate value may be measured by one or more sensors. The sensor may be, but without limitation, an angular velocity sensor (gyroscope), acceleration sensor, or geomagnetic sensor.

In accordance with example embodiments of the present invention, a virtual display screen may be composed using resolution information and position (e.g. screen location) information. In addition, the virtual display screen may be at least partially set using software stored in the storage.

Resolution information of a display apparatus connected with a computing device may be provided to the device by the display apparatus, or extracted from the display apparatus by the device.

By displaying a display screen having a size corresponding to resolution(s) of each display apparatus on software which sets a virtual display screen, and setting a position relation among those screen in/on software, the virtual display screen as illustrated in FIG.7 can be configured.

It is not necessary that physical disposition and size of the virtual display screen coincide with those of a real display apparatus. In accordance with example embodiments of the present invention, position/configuration of the virtual display screen can be set regardless of disposition of the real display apparatus. In addition, even for a display apparatus having a large-size screen, if resolution is set to be low, a size on the virtual display screen could be relatively small.

Information on size of bezel and the like can be obtained from a display apparatus or from an external server based on information such as a model name of a display apparatus. Further, a user may input information on size of bezel or gaps between the display apparatuses, or of a positional relationship between display apparatuses, which can be used in the setup/configuration of the virtual screen.

Furthermore, a program code for performing the various aforementioned controlling methods may be stored in various kinds of record medium. Specifically, the program code may be stored in various types of terminal-readable record medium such as a RAM, flash memory, ROM, erasable programmable ROM (EPROM), electronically erasable and programmable ROM (EEPROM), resistor, hard disc, removable disc, memory card, universal serial bus (USB) memory, and CD-ROM.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for controlling a computing apparatus, the method comprising:
determining a size of a virtual display screen formed by a plurality of display apparatuses connected to the computing apparatus (S1010);
setting an initial position of a pointer associated with a pointing apparatus (S1020);
determining a movement range of the pointing apparatus based on the size of the virtual display screen and the initial position of the pointer (S1030); and
in response to receiving movement information about movement of the pointing apparatus within the movement range (S1040), controlling the plurality of display apparatuses to display the pointer in a corresponding portion of the virtual display screen (S1050).

2. The method according to claim 1, wherein the determining the size of the virtual display screen comprises:
receiving connection and resolution information about a connection relationship and resolution of the plurality of display apparatuses; and
determining a length and width of the virtual display screen based on the connection and resolution information.

3. The method according to claim 1, wherein the setting the initial position of the pointer comprises:
selecting one of the plurality of display apparatuses according to a user command; and
setting a central point of a screen of the selected display apparatus as the initial position of the pointer.

4. The method according to claim 1, wherein the determining the movement range of the pointing apparatus comprises:
determining maximum up, maximum down, maximum left, and maximum right distances that the pointer may move within the virtual display screen relative to the initial position of the pointer; and
determining the movement range of the pointing apparatus based on the maximum up, maximum down, maximum left, and maximum right distances.

5. The method according to claim 1, the method further comprising mapping a movement angle of the pointing apparatus and a pixel of the virtual display screen,
wherein the controlling the plurality of display apparatuses comprises controlling the plurality of display apparatuses to display the pointer on the pixel mapped with the movement angle of the pointing apparatus.

6. The method according to claim 1, the method further comprising controlling, in response to the pointing apparatus having moved such that the pointer moves outside the movement range, the plurality of display apparatuses to display the pointer on a final position of the pointer, to remove the pointer, or to track the movement of the pointer using a pixel in the virtual display that is nearest the pointer.

7. The method according to claim 1, the method further comprising controlling, in response to the pointing apparatus having moved such that the pointer moves to an area on the virtual display screen where the pointer cannot be displayed, the plurality of display apparatuses to display the pointer on a final position of the pointer, to remove the pointer, or to track the movement of the pointer using a pixel in the virtual display that is nearest the pointer.

8. A computing apparatus (100) comprising:
a communicator (110) configured to receive data from an external apparatus, and transmit data to the external apparatus; and
a controller (120) configured to determine a size of a virtual display screen formed by a plurality of display apparatuses connected with the computing apparatus, set an initial position of a pointer associated with a pointing apparatus, determine a movement range of the pointing apparatus based on a size of the virtual display screen and the initial position of the pointer, and control, in response to the communicator receiving movement information about movement of the pointing apparatus made within the movement range, the plurality of display apparatuses to display the pointer at a location within the virtual screen that corresponds to the movement of the pointing apparatus.

9. The computing apparatus according to claim 8, wherein the controller is further configured to control the communicator to receive connection and resolution information about a connection relationship and resolution of the plurality of display apparatuses, determine a length and width of the virtual display screen based on the connection and resolution information, and determine a size of the virtual display screen.

10. The computing apparatus according to claim 8, wherein the controller is further configured to select one of the plurality of display apparatuses according to a user command, and set a central point of a screen of the selected display apparatus as the initial position of the pointer.

11. The computing apparatus according to claim 8, wherein the controller is further configured to determine maximum up, maximum down, maximum left, and maximum right distances that the pointer may move relative to the initial position of the pointer based on the size of the virtual display screen and the initial position of the pointer, and determine a movement range of the pointing apparatus based on the determined maximum up, maximum down, maximum left, and maximum right distances.

12. The computing apparatus according to claim 8, wherein the controller is further configured to map a movement angle of the pointing apparatus and a pixel of the virtual display screen, and control the plurality of display apparatuses connected with the computing apparatus to display the pointer on the pixel mapped with the movement angle of the pointing apparatus.

13. The computing apparatus according to claim 8, wherein the controller is further configured to control, in response to the pointing apparatus having moved such that the pointer moves outside the movement range, the plurality of display apparatuses to display the pointer on a final position of the pointer, to remove the pointer, or to track the movement of the pointer using a pixel in the virtual display that is nearest the pointer.

14. The computing apparatus according to claim 8, wherein the controller is further configured to control, in response to the pointing apparatus having moved such that the pointer moves to an area on the virtual display screen where the pointer cannot be displayed, the plurality of display apparatuses to display the pointer on a final position of the pointer, to remove the pointer, or to track the movement of the pointer using a pixel in the virtual display that is nearest the pointer.

15. A multi-display system comprising:
a computing apparatus (100);
a pointing apparatus (300) configured to sense a movement and transmit movement information about the movement to the computing apparatus; and
a plurality of display apparatuses (200) connected with the computing apparatus and configured to display a pointer associated with the pointing apparatus,
wherein the computing apparatus is configured to determine a size of a virtual display screen formed by the plurality of display apparatuses, set an initial position of the pointer, determine a movement range of the pointing apparatus based on the size of the virtual display screen and the initial position of the pointer, and control, in response to the pointing apparatus having sensed the movement made within the movement range and transmitted the movement information, the plurality of display apparatuses to display the pointer in accordance with the movement information.
